# EUROPEAN PATENT SPECIFICATION

(11) **EP 3 469 221 B1**
(45) Date of publication and mention of the grant of the patent: **04.11.2020**
(21) Application number: 17731417.6
(22) Date of filing: 09.06.2017
(51) Int. Cl.: F16C 11/06

(54) **SOCKET ASSEMBLY AND METHOD OF MAKING A SOCKET ASSEMBLY**
KUGELGELENK UND VERFAHREN DAZU
JOINT À ROTULE ET METHODE POUR FABRIQUER UN TEL JOINT

(30) Priority: 10.06.2016 US 201615178779
(43) Date of publication of application: 17.04.2019
(73) Proprietor: Federal-Mogul Motorparts LLC, Southfield, MI 48034 (US)
(72) Inventor: PARKER, Glen, C., St. Peters MO 63376 (US); BRETZ, Kurt, R., Albers IL 62215 (US); SUGG, Brennan, St. Louis MO 63108 (US)
(74) Representative: HGF
(86) International application number: PCT/US2017/036676
(87) International publication number: WO 2017/214466

(56) References cited:
- DE-A1-102008 003 463
- DE-B- 1 294 105
- US-A- 3 571 880
- US-A- 5 066 159
- US-A- 5 286 131
- US-A1- 2007 163 100

## Description

### BACKGROUND OF THE INVENTION

### 1. Field of the Invention

The present invention is related generally to socket assemblies and, more particularly, to socket assemblies of the type for use in vehicle suspension and steering assemblies.

### 2. Related Art

Socket assemblies of the type that are generally used in automobile suspension and steering systems typically include a ball stud which is movable relative to a housing. Such socket assemblies typically include one or more bearings that are positioned within the housing and are in sliding contact with a ball portion of the ball stud to facilitate the rotation of the ball stud relative to the housing. The bearings are typically either made of metal or of a hard plastic material.

### Closest prior art

US 5286131 (A) discloses a ball joint having a stud with a ball end disposed in a housing in abutting engagement with a bearing, wherein the bearing has a generally cylindrical outer side surface with a diameter less than that of an inner side surface of the housing, to facilitate insertion of the bearing into the housing during assembly.

In socket assemblies with either metal or plastic internal components, internal clearances within the socket assemblies can reduce the operating lives of those socket assemblies. For example, eccentricities between centerlines of various spherically curved components in a socket assembly can cause adverse wear and/or movements in the socket assembly during its operating life.

One approach to minimize clearances between components of a socket assembly is to add an extra component which is collapsible and then collapsing that component during assembly. However, the use of such an additional component is only possible in cases where there is enough space to add such a component, and even then, the addition of such an additional component adds manufacturing and material cost to the socket assembly.

### SUMMARY OF THE INVENTION AND ADVANTAGES

The present invention is related to a socket assembly made in accordance with the appended claims which includes a housing with an inner bore that extends along an axis from a wall at a generally closed first end to an open second end. The socket assembly further includes a ball stud with a ball portion that is received in the inner bore of the housing and a shank portion which projects out of the inner bore through the open second end of the housing. A backing bearing is disposed in the inner bore and is unconstrained by the housing in a radial direction. The backing bearing presents a semi-spherically curved first bearing surface which is in sliding contact with an outer surface of the ball portion of the ball stud. An exit bearing is locked into a fixed position within the inner bore of the housing and has a second bearing surface which is in sliding contact with the ball portion of the ball stud. A spring is positioned in the inner bore of the housing between the wall and the backing bearing and imparts a preload force against the backing bearing. The wall at the generally closed first end of the housing is deformed to preload the spring against the backing bearing and to reduce internal clearances between components in the inner bore of the housing.

The socket assembly is advantageous because it allows for the use of fewer components and looser tolerances on dimensional features for those components while still achieving minimal internal clearances between components after assembly. Specifically, the unconstrained nature of the backing bearing in the radial direction allows the backing bearing to automatically situate itself in an ideal location within the inner bore during the deformation operation. The reduced internal clearance produced by deforming the wall of the housing allows for additional consistency during the manufacturing of socket assemblies and for a longer operating life than similar designs without this feature. These improved clearances come with no additional space constraints or cost.

The second bearing surface of the exit bearing may include a semi-spherically curved portion and a cylindrical portion which extends past an equator of the ball portion of the ball stud.

The inner bore of the housing may have a progressively increasing diameter from the generally closed first end to the open second end and the housing presents a shoulder which faces towards the open second end and wherein the exit bearing abuts the shoulder.

The housing may include a radially inwardly extending lip at the open second end and wherein the exit bearing is trapped between the radially inwardly extending lip and the shoulder.

The socket assembly may further include a dust boot which extends from an end that is trapped between the radially inwardly extending lip of the housing and the exit bearing to an end that is sealed against the shank portion of the ball stud.

The spring may be a Belleville washer.

The generally closed first end may include a lubricant opening.

According to an aspect of the present invention, there is provided a method of making a socket assembly. The method includes the step of preparing a housing with an inner bore which extends from a wall at a generally closed first end to an open second end and wherein the wall has an exterior surface with a projection that projects in a direction away from the second open end. The method continues with the step of inserting a spring into the inner bore of the housing. The method proceeds with the step of inserting a backing bearing with a first bearing surface into the inner bore of the housing such that the backing bearing is allowed to move in a radial direction within the inner bore relative to the housing. The method continues with the step of inserting a ball portion of a ball stud into the inner bore of the housing and wherein the ball stud has a shank portion which extends from the ball portion out of the inner bore through the open second end of the housing. The method proceeds with the step of fixing an exit bearing with a second bearing surface into a fixed position within the inner bore of the housing. The method continues with the step of deforming the wall at the generally closed first end of the housing to preload the spring against the backing bearing, to urge the first bearing surface of the backing bearing against an outer surface of the ball portion of the ball stud, to further urge the ball portion of the ball stud against the second bearing surface of the exit bearing and to reduce clearances between components in the inner bore of the housing.

According to another aspect of the present invention, the step of further deforming the wall is further defined as pressing the projection of the wall until the exterior surface of the wall is generally flat.

According to yet another aspect of the present invention, the projection is generally conical in shape.

According to still another aspect of the present invention, the inner bore of the housing presents a shoulder that faces towards the open section, and the exit bearing abuts the shoulder.

According to a further aspect of the present invention, the method further includes the step of swaging the open section end of the housing to present a radially inwardly extending lip to trap the exit bearing between the radially inwardly extending lip and the shoulder.

According to yet a further aspect of the present invention, the second bearing surface includes a semi-spherically curved portion and a cylindrical portion.

According to still another aspect of the present invention, the generally closed first end of the housing includes a lubricant opening.

### BRIEF DESCRIPTION OF THE DRAWINGS

These and other features and advantages of the present invention will be readily appreciated, as the same becomes better understood by reference to the following detailed description when considered in connection with the accompanying drawings wherein:
Figure 1 is a front elevation view of a first exemplary embodiment of a socket assembly constructed according to the method of the present invention;
Figure 2 is an exploded and sectional view of the socket assembly of Figure 1;
Figure 3 is a cross-sectional view of a housing of the socket assembly of Figure 1;
Figure 4 is a cross-sectional view of the socket assembly of Figure 1 in a predeforming state;
Figure 5 is a cross-sectional view of the socket assembly of Figure 1 in after final assembly;
Figure 6 is an enlarged view of a portion of Figure 5;
Figure 7 is an enlarged view of another portion of Figure 5;
Figure 8 is a cross-sectional and fragmentary view of a second exemplary embodiment of the socket assembly;
Figure 9 is an enlarged view of a portion of Figure 8;
Figure 10 is a cross-sectional and fragmentary view of a portion of a third exemplary embodiment of the socket assembly;
Figure 11 is a front and partially sectioned view of a first exemplary embodiment of an exit bearing;
Figure 12 is a top view of the exit bearing of Figure 11;
Figure 13 is a front and partially sectioned view of a second exemplary embodiment of the exit bearing; and
Figure 14 is a front and partially sectioned view of the second exemplary embodiment of the exit bearing.

### DESCRIPTION OF THE ENABLING EMBODIMENT

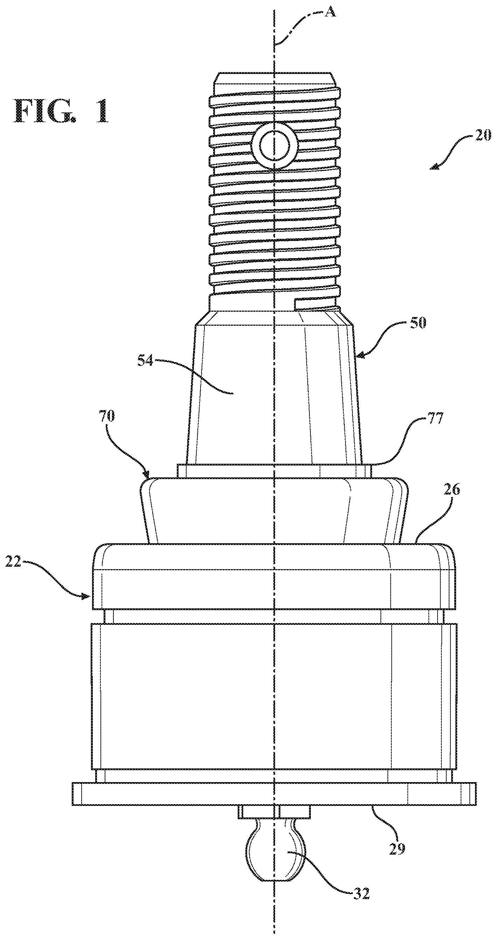

Referring to Figure 1, wherein like numerals indicate corresponding parts throughout the several views, an exemplary embodiment of an improved socket assembly **20** (specifically, a ball joint assembly), is generally shown. In the exemplary embodiment, the socket assembly **20** is configured for joining a control arm (not shown) with a knuckle (not shown) of a vehicle suspension assembly. However, it should be appreciated that the socket assembly **20** could find uses in tie rod ends or in a wide range of automotive and non-automotive applications.

The socket assembly **20** includes a housing **22** with an inner bore that extends along an axis **A** from a closed first end **24** to an open second end **26.** At the closed first end **24,** the housing **22** presents a lower wall **28** with an inner surface **27** and an exterior surface **29.** The housing **22** is preferably made of a metal, such as steel or an alloy steel, and may be shaped through any suitable process or combination of processes including, for example, forging, casting, machining from a billet, etc. In the exemplary embodiment, the housing **22** is a cartridge for press-fitting into an opening of the control arm. However, the housing could alternately be integrally formed with another component, e.g., a control arm or a tie rod end. Also, it should be appreciated that the lubricant opening **30** does not have to be on the lower wall **28** but could instead be located on any suitable portion of the housing **22.**

The inner bore of the housing **22** has a progressively increasing diameter from the closed first end **24** to the open second end **26.** Specifically, the inner bore has a first portion **34** with a first diameter **D₁** adjacent the closed first end **24,** a second portion **36,** a third portion **38** with a second diameter **D₂** that is larger than the first diameter **D₁** and a fourth portion **39** adjacent the open second end **26** with a third diameter **D₃** that is greater than the second diameter **D₂.** Between the second and third portions **36, 38,** the housing **22** presents a first shoulder **40** which faces towards the open second end **26.** Between the third and fourth portions **38, 39,** the housing **22** presents a second shoulder **41** which also faces toward the open second end **26.** In the exemplary embodiment, the lower wall **28** of the housing presents a lubricant opening **30** which receives a grease fitting **32** to convey a lubricant into the first portion **34** of the inner bore to initially lubricate the socket assembly **20** and to re-lubricate the socket assembly **20** as part of routine maintenance. Alternately, the lubricant opening **30** could open to any of the second, third or fourth portions of the housing **22.**

A backing bearing **42** is received in the first portion **34** of the inner bore and has a semi-spherically curved first bearing surface **44** which faces axially towards the second open end **26.** The backing bearing **42** has an outer diameter which is less than the first diameter **D₁** of the first portion **34.** As such, the backing bearing **42** is movable within the first portion **34** of the inner bore in a radial direction relative to the housing **22** to allow the backing bearing **42** to float radially within the first portion **34** of the inner bore. The first bearing surface **44** of the exemplary embodiment is provided with a plurality of first grooves **48** formed thereon for conveying a lubricant from the lubricant opening **30** into the second portion **36** of the inner bore. A lower surface of the backing bearing **42** also presents a plurality of second grooves **49** for channeling the lubricant between the backing bearing **42** and the lower wall **28** to reduce friction between the backing bearing **42** and the lower wall **28** and facilitate the radial movement of the backing bearing **42** within the first portion **42** of the inner bore.

The socket assembly **20** further includes a ball stud **50** which is partially received in the inner bore of the housing **22.** Specifically, the ball stud **50** includes a ball portion **52** that is fully disposed in the inner bore and a shank portion **54** which projects out of the inner bore through the open second end **26.** The exemplary embodiment of the shank portion **54** extends from the ball portion **52** to a distal end which is threaded for receiving a nut to connect the shank portion **52** with another component, e.g., a knuckle. Alternately, the shank portion **54** could be configured for connection with the other component through any suitable means. The ball portion **52** of the ball stud **50** has a generally semi-spherically curved outer surface which has a similar radius of curvature to the first bearing surface **44** of the backing bearing **42.** The outer surface of the ball portion **52** is in sliding contact with the first bearing surface **44** of the backing bearing **42** for allowing the ball stud **50** to rotate or pivot relative to the backing bearing **42** and the housing **22** during operation of the suspension assembly. The backing bearing **42** is preferably made of metal, such as steel or a steel alloy and may be shaped through any suitable process.

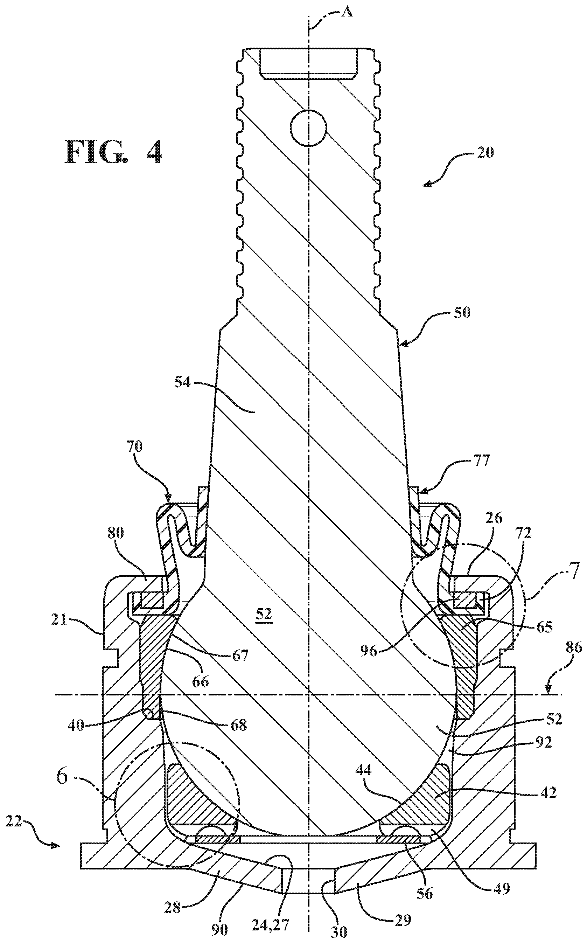

An exit bearing **65** is received in the second portion **36** of the inner bore and has a second bearing surface **66** which is in sliding contact with the ball portion **52** of the ball stud **50.** The second bearing surface **66** includes a semi-spherically curved portion **67** and a cylindrical portion **68.** The semi-spherically curved portion **67** has a similar radius of curvature as the ball portion **52** and the first bearing surface **44** and is in sliding contact an opposite hemisphere of the ball portion **52** from the first bearing surface **44.** The cylindrical portion **68** of the second bearing surface **66** extends past (i.e., below) and is in sliding contact with an equator, or center-line **86,** of the ball portion **52** and has a generally constant diameter as viewed in cross-section for a predetermined length. Similar to the first bearing surface **44,** the second bearing surface **66** may include one or more grooves for distributing a lubricant around the surface-to-surface contact between the second bearing surface **66** and the ball portion **52** of the ball stud **50** and for conveying the lubricant in the inner bore axially across the exit bearing **65.** As shown in Figure 4, a gap between the backing bearing **42** and the exit bearing **65** functions as a lubrication reservoir which holds the lubricant. The semi-spherically curved portion **67** of the second bearing surface **66** captures the outer surface of the ball portion **52** of the ball stud **50** to limit axial movement of the ball stud **50** in an axial direction towards the open first end **26** of the housing **22.** The cylindrical portion **68** of the second bearing surface **66** limits radial movement of the ball stud **50** relative to the housing **22** and transmits radial forces from the ball stud **50** to the housing **22.** During operation of the vehicle, the semi-spherically curved portion **67** of the second bearing surface **66** of the exit bearing **65** and the first bearing surface **44** of the backing bearing **42** transfer all or substantially all of the axial forces between the ball stud **50** and the housing **22,** and the cylindrical portion **68** of the second bearing surface **66** of the exit bearing **65** transfers all or substantially all of the radial forces between the ball stud **50** and the housing **22.**

The exit bearing **65** has a generally flat upper surface **69** which faces towards the open second end **26** of the housing **22.** Opposite of the upper surface **69,** the exit bearing **65** has a lower surface **71** which is seated against the shoulder **40** of the housing **22** to establish a fixed distance between the lower wall **28** of the housing **22** and the exit bearing **65.**

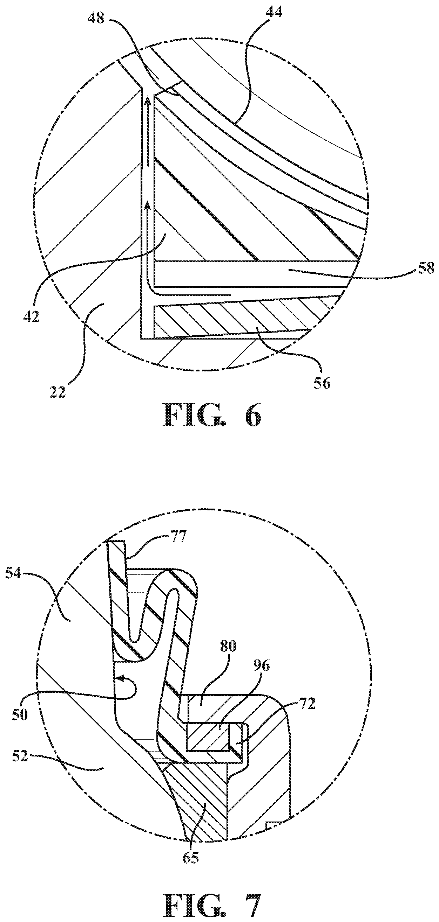

The socket assembly **20** further includes a dust boot **70** which is sealed against the housing **22** and against the ball stud **50** for trapping a lubricant, such as grease, in an interior of the socket assembly **20** and for keeping contaminants outside of the interior of the socket assembly **20.** The dust boot **70** includes a boot body **76** which is made of a flexible sealing material, such as rubber or certain plastics. In the embodiment of Figures 4, 5 and 7, a radially outwardly extending flange **72** is positioned in the fourth portion **39** of the inner bore of the housing **22.** The radially outwardly extending flange **72** is in surface-to-surface contact with the upper surface **69** of the exit bearing **65.** The radially outwardly extending flange **72** is also sealed against a radially inwardly extending lip **80** which is formed into the open second end **26** of the housing **22.** The dust boot **70** also has an upper end **77** which is sealed against the shank portion **54** of the ball stud **50.** The radially inwardly extending lip **80** is preferably formed into the housing **22** by spinning, or swaging, the open second end **26** of the housing **22** inwardly to trap the radially outwardly extending flange **72** of the dust boot **70** and to hold the exit bearing **65** in the position between the radially outwardly extending flange **72** of the dust boot **70** and the shoulder **40** of the housing **22.** Also in this embodiment, a rigid and non-flexible insert **96** is at least partially embedded within the radially outwardly extending flange **72** of the boot body **76.**

A Belleville spring washer **56** (also known as a washer spring) is positioned in the first portion **34** of the inner bore of the housing **22** and imparts a preload or biasing force by the backing bearing **42** against the ball portion **52** of the ball stud **50** to maintain surface-to-surface contact between the first and second bearing surfaces **44, 66** and the outer surface of the ball portion **52** even as these surfaces wear during operation of the socket assembly **20.** It should be appreciated that another type of compression spring, other than a Belleville washer, could alternately be employed.

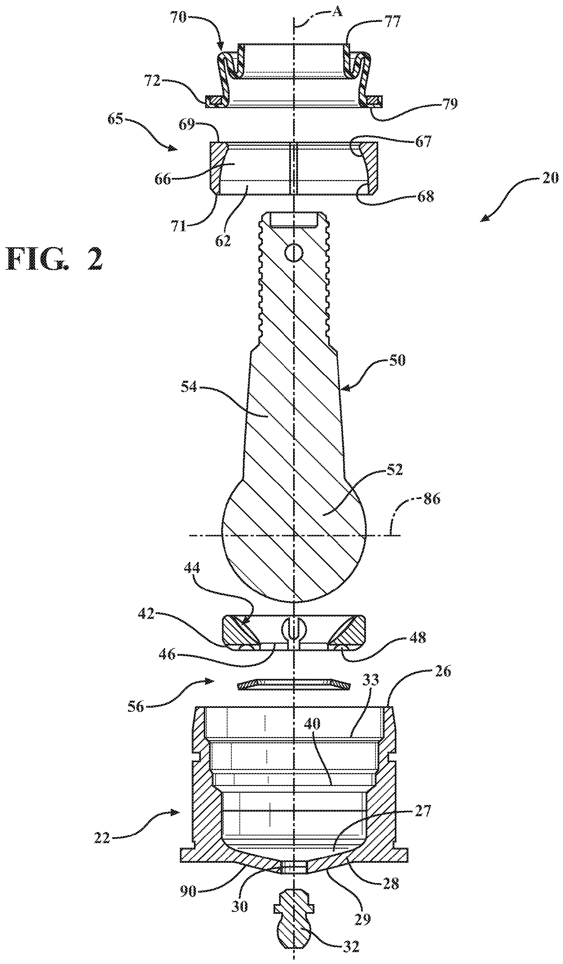

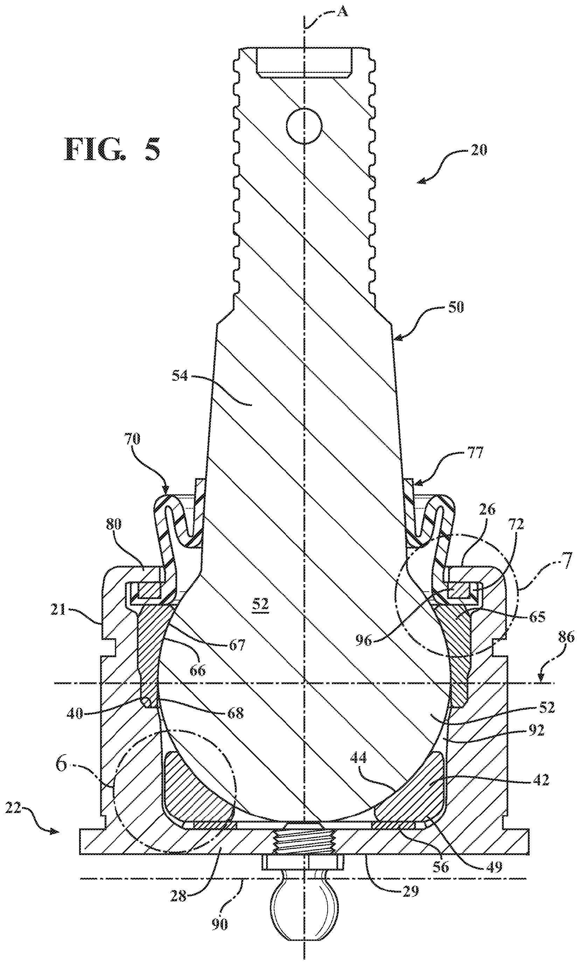

As shown in Figures 2-4, the lower wall **28** of the housing **22** is preformed with a conically shaped projection **90** which surrounds the lubricant opening **30** and which projects axially away from the closed first end **24** of the inner bore. In reference to Figure 5, during manufacture of the socket assembly **20,** after the open second end **26** of the housing **22** is swaged, the conically shaped projection **90** is pressed to deform the lower wall **28** such that its exterior surface **29** and its interior surface **27** are generally planar or flat in final form. The flatting of the lower wall **28** further biases the first bearing surface **44** of the backing bearing **42** against the outer surface of the ball portion **52** of the ball stud **50.** By way of this pressing operation, all of the clearances between the components in the inner bore of the housing **22** are reduced, and thus, the swaging operation does not affect any clearances between the components of the socket assembly **20.**

As shown in Figure 2, in this exemplary embodiment, the Belleville spring washer **56** is oriented with a concave side facing downward towards the closed first end **24** of the inner bore of the housing **22.** The Belleville spring washer **56** is stressed when the exit bearing **65** is pressed into the third portion **38** of the inner bore and is seated against the shoulder **40,** which further biases the ball portion **52** of the ball stud **50** against the backing bearing **42,** which is further biased against the Belleville spring washer **56** to force the Belleville spring washer **56** into a stressed condition against the lower wall **28** of the housing **22.** Alternately, if the Belleville spring washer **56** is placed in the inner bore with the concave side facing towards the open second end **26** of the inner bore, this allows the Belleville spring washer **56** to remain in an unstressed condition until the lower wall **28** is pressed flat (see Figure 5), thereby preloading the backing bearing **42** against the ball portion **52** of the ball stud **50.**

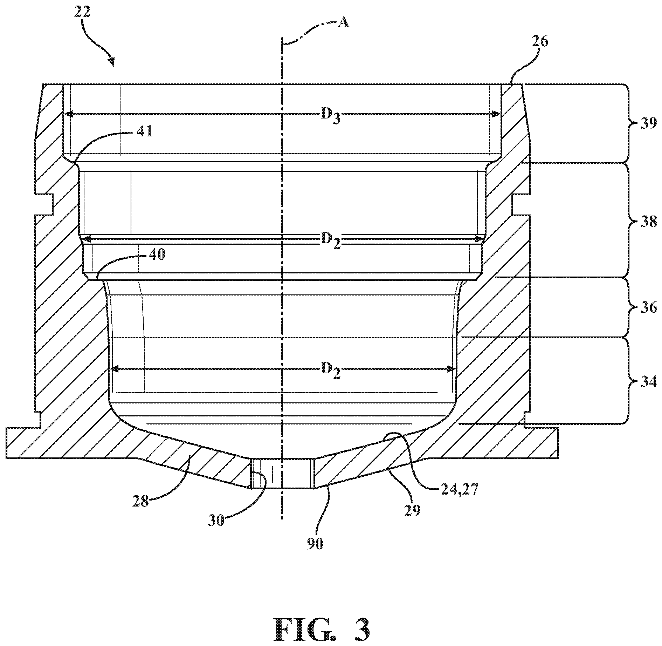

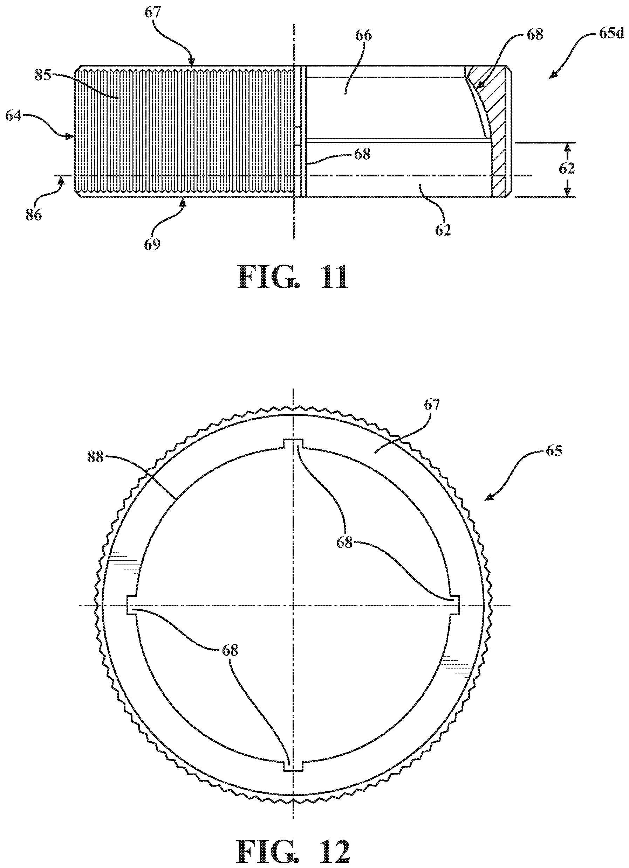

Referring now to Figures 3, 4, 11 and 12, the exit bearing **64** has a cylindrically shaped outer surface which has an outer diameter that is larger than the second diameter **D₂** of the third portion **38** of the inner bore to facilitate an interference fit between the exit bearing **64** and the housing **22.** The outer surface is also provided with a plurality of axially extending knurls **85,** or ridges, which are spaced circumferentially from one another for restricting rotation of the exit bearing **64** relative to the housing **22.** As shown in Figure 12, an opening **88** at the top of the exit bearing **64** is generally circular for allowing the ball stud **50** to freely pivot relative to the housing **22** and the exit bearing **64** in any direction.

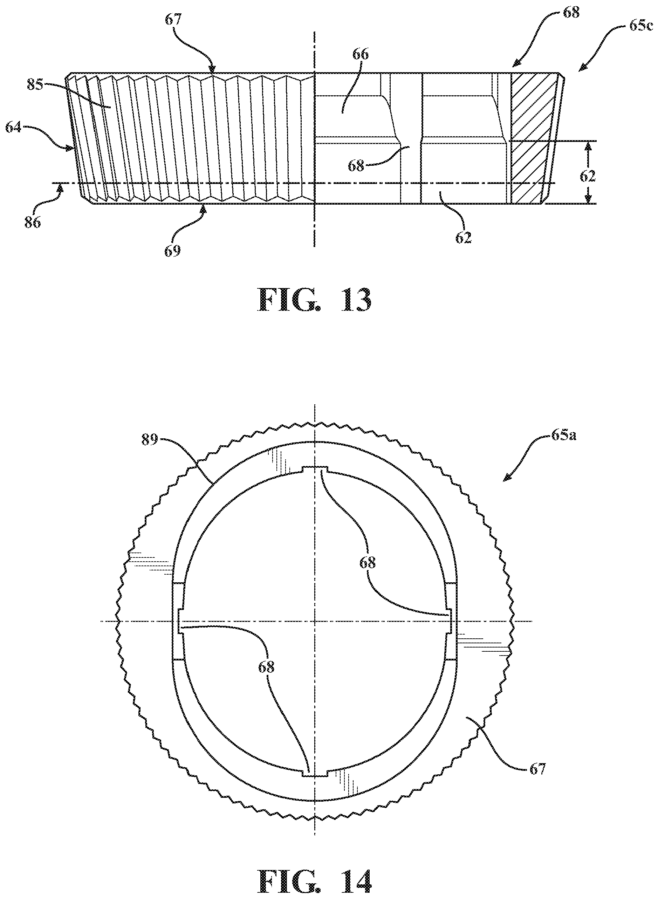

Referring now to Figures 13 and 14, wherein like numerals, separated by a prefix of "1" indicate corresponding parts with the above-described embodiment, in an alternate embodiment of the exit bearing **164,** the outer surface of the exit bearing **164** is tapered. Specifically, the exit bearing **164** has a frusto-conical shape with a small circumference towards the closed first end **24** (shown in Figure 4) and with a large circumference towards the open first end **26** (also shown in Figure 4) of the housing **22** (also shown in Figure 4). In this embodiment, the opening **188** at the top of the exit bearing **164** is generally oval, or elliptical, in shape for restricting the pivotal movement of the ball stud **50** (shown in Figure 4) relative to the exit bearing **164** and relative to the housing **22** (also shown in Figure 4) in one direction as compared to another direction.

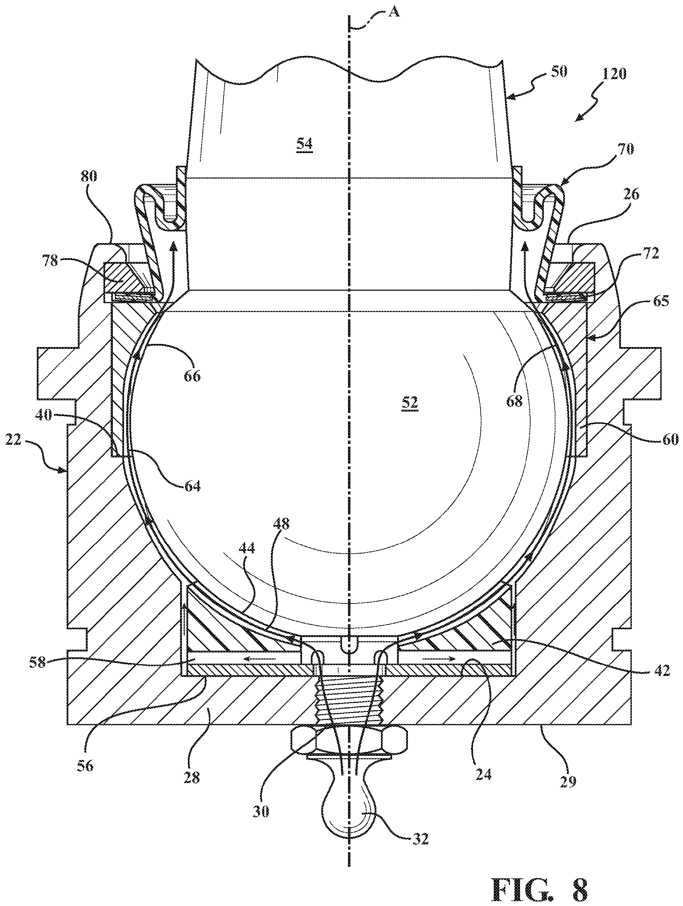

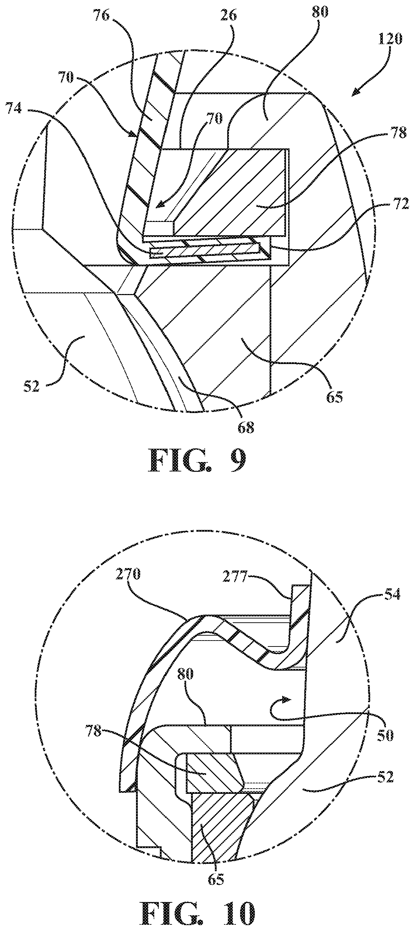

Referring now to Figures 8 and 9, another exemplary embodiment of the socket assembly **120** is generally shown. The second exemplary embodiment is distinguished from the first exemplary embodiment by the radially outwardly extending flange **72** on the boot body **76** including a Belleville spring washer **74** embedded therein rather than a rigid and non-flexible insert. The Belleville spring washer **74** applies a biasing force to urge the exit bearing **65** against the ball portion **52** of the ball stud **50.** Also provided is a cover plate **78** which is positioned between the radially inwardly extending lip **80** of the housing **22** and the radially outwardly extending flange **72** of the boot body **76.**

Referring now to Figure 10, yet another exemplary embodiment of the socket assembly **220** is generally shown with like numerals, separated by a prefix of "2" indicating corresponding parts with the above-described embodiments. In this exemplary embodiment, the dust boot **270** is sealed against an outer surface **21** of the housing **22** rather than an inner surface as is the case in the other embodiments.

Another aspect of the present invention is for a method of making a socket assembly **20.** The method includes the step of preparing a housing **22** with an inner bore which extends from a lower wall **28** at a generally closed first end **24** to an open second end **26.** The lower wall **28** has an exterior surface with a conically shaped projection **90** that projects in an axial direction away from the second open end **26.** The method continues with the step of inserting a spring, such as a Belleville spring washer **56,** into the inner bore of the housing **22.** The method proceeds with the step of inserting a backing bearing **42** with a first bearing surface **44** into the inner bore of the housing **22** such that the backing bearing **42** is movable in a radial direction relative to the housing **22** within the inner bore. The method continues with the step of inserting a ball portion **52** of a ball stud **50** into the inner bore of the housing **22** such that a shank portion **54** of the ball stud **50** extends from the ball portion **52** out of the inner bore through the open second end **26** of the housing **22.** The method proceeds with the step of fixing an exit bearing **65** with a second bearing surface **66** into a fixed position within the inner bore of the housing **22.** In the exemplary method, the exit bearing **65** is fixed between a shoulder **40** of the housing **22** and a radially extending lip **80** that is formed by swaging the open second end **26** of the housing **22.** The method continues with the step of deforming the lower wall **28** at the generally closed first end **24** of the housing **22** to preload the Belleville washer **56** against the backing bearing **42** and urge the first bearing surface **44** of the backing bearing **42** against an outer surface of the ball portion **52** of the ball stud **50.** In the exemplary method, the step of deforming is further defined as pressing the projection **90** until the exterior surface of the wall is generally flat. The lower wall **28** could be pressed, for example, with a ram.

It should be appreciated that the use of the orientation defining terms such as "upper" and "lower" herein is in reference to the orientation of the socket assembly **20** in the Figures and is not considered to require a particular orientation or otherwise be limiting.

Obviously, many modifications and variations of the present invention are possible in light of the above teachings and may be practiced otherwise than as specifically described while within the scope of the appended claims. It is contemplated that all features of all claims and of all embodiments can be combined with each other, so long as such combinations would not contradict one another.

## Claims

1. A method of making a socket assembly (20; 120; 220), comprising the steps of:
preparing a housing (22) with an inner bore which extends from a wall (28) at a generally closed first end (24) to an open second end (26) and wherein the wall has an exterior surface (29) with a projection (90) that projects in a direction away from the second open end;
inserting a spring (56) into the inner bore of the housing;
inserting a backing bearing (42) with a first bearing surface (44) into the inner bore of the housing such that the backing bearing is movable relative to the housing in a radial direction within the inner bore;
inserting a ball portion (52) of a ball stud (50) into the inner bore of the housing and wherein the ball stud has a shank portion (54) which extends from the ball portion out of the inner bore through the open second end of the housing;
fixing an exit bearing (65; 64; 164) with a second bearing surface (66) into a fixed position within the inner bore of the housing; and
deforming the wall at the generally closed first end of the housing to preload the spring against the backing bearing and urge the first bearing surface of the backing bearing against an outer surface of the ball portion of the ball stud and to reduce clearances between components in the inner bore of the housing.

2. The method as set forth in claim 1 wherein the step of deforming the wall (28) is further defined as pressing the projection (90) of the wall.

3. The method as set forth in claim 2 wherein the step of pressing the projection (90) of the wall (28) is further defined as pressing the projection of the wall until the exterior surface (29) of the wall is generally flat.

4. The method as set forth in claim 3 wherein the projection (90) is generally conical in shape.

5. The method as set forth in claim 1 wherein the inner bore of the housing (22) presents a shoulder (40) that faces towards the open second end (26) and wherein the exit bearing (65; 64; 164) abuts the shoulder.

6. The method as set forth in claim 2 further including the step of swaging the open second end (26) of the housing (22) to present a radially inwardly extending lip (80) to trap the exit bearing (65; 64; 164) within the housing between the radially inwardly extending lip and the shoulder (40).

7. The method as set forth in claim 1 wherein the second bearing surface (66) includes a semi-spherically curved portion (67) and a cylindrical portion (68)

8. The method as set forth in claim 1 wherein the generally closed first end (24) of the housing includes a lubricant opening (30).

## Patentansprüche

1. Verfahren zum Herstellen einer Buchsenanordnung (20; 120; 220), umfassend die Schritte:
Vorbereiten eines Gehäuses (22) mit einer Innenbohrung, die sich von einer Wand (28) an einem im Allgemeinen geschlossenen ersten Ende (24) zu einem offenen zweiten Ende (26) erstreckt und wobei die Wand eine Außenfläche (29) mit einem Vorsprung (90) aufweist, das in eine Richtung weg vom zweiten offenen Ende vorsteht;
Einsetzen einer Feder (56) in die Innenbohrung des Gehäuses;
Einsetzen eines Stützlagers (42) mit einer ersten Lageroberfläche (44) in die Innenbohrung des Gehäuses, sodass das Stützlager in einer radialen Richtung innerhalb der Innenbohrung relativ zu dem Gehäuse beweglich ist;
Einsetzen eines Kugelabschnitts (52) eines Kugelbolzens (50) in die Innenbohrung des Gehäuses und wobei der Kugelbolzen einen Schaftabschnitt (54) aufweist, der sich vom Kugelabschnitt aus der Innenbohrung heraus durch das offene zweite Ende des Gehäuses erstreckt;
Befestigen eines Ausgangslagers (65; 64; 164) mit einer zweiten Lageroberfläche (66) in einer festen Position innerhalb der Innenbohrung des Gehäuses; und
Verformen der Wand am im Allgemeinen geschlossenen ersten Ende des Gehäuses, um die Feder gegen das Stützlager vorzuspannen und die erste Lageroberfläche des Stützlagers gegen eine Außenfläche des Kugelabschnitts des Kugelbolzens zu drücken und das Spiel zwischen den Bauteilen in der Innenbohrung des Gehäuses zu verringern.

2. Verfahren nach Anspruch 1, wobei der Schritt des Verformens der Wand (28) ferner als Pressen des Vorsprungs (90) der Wand definiert ist.

3. Verfahren nach Anspruch 2, wobei der Schritt des Pressens des Vorsprungs (90) der Wand (28) ferner als Pressen des Vorsprungs der Wand, bis die Außenfläche (29) der Wand im Allgemeinen flach ist, definiert ist.

4. Verfahren nach Anspruch 3, wobei der Vorsprung (90) im Allgemeinen eine konische Form hat.

5. Verfahren nach Anspruch 1, wobei die Innenbohrung des Gehäuses (22) eine Schulter (40) aufweist, die zum offenen zweiten Ende (26) zeigt, und wobei das Ausgangslager (65; 64; 164) an der Schulter anliegt.

6. Verfahren nach Anspruch 2, ferner umfassend den Schritt des Stauchens des offenen zweiten Endes (26) des Gehäuses (22), um eine sich radial nach innen erstreckende Lippe (80) aufzuweisen, um das Ausgangslager (65; 64; 164) innerhalb des Gehäuses zwischen der sich radial nach innen erstreckenden Lippe und der Schulter (40) einzufangen.

7. Verfahren nach Anspruch 1, wobei die zweite Lageroberfläche (66) einen halbkugelförmig gekrümmten Abschnitt (67) und einen zylindrischen Abschnitt (68) umfasst.

8. Verfahren nach Anspruch 1, wobei das im Allgemeinen geschlossene erste Ende (24) des Gehäuses eine Schmiermittelöffnung (30) umfasst.

## Revendications

1. Procédé de fabrication d'un ensemble douille (20, 120, 220), comprenant les étapes de :
préparation d'un logement (22) avec un alésage interne qui s'étend à partir d'une paroi (28) au niveau d'une première extrémité globalement fermée (24) jusqu'à une seconde extrémité ouverte (26) et la paroi possédant une surface extérieure (29) avec une saillie (90) qui fait saillie dans une direction s'éloignant de la seconde extrémité ouverte ;
insertion d'un ressort (56) dans l'alésage interne du logement ;
insertion d'un palier de support (42) avec une première surface de palier (44) dans l'alésage interne du logement de sorte que le palier de support soit mobile par rapport au logement dans une direction radiale à l'intérieur de l'alésage interne ;
insertion d'une partie rotule (52) d'un pivot à rotule (50) dans l'alésage interne du logement et ledit pivot à rotule possédant une partie tige (54) qui s'étend à partir de la partie rotule hors de l'alésage interne à travers la seconde extrémité ouverte du logement ;
fixation d'un palier de sortie (65, 64, 164) avec une seconde surface de palier (66) dans une position fixe à l'intérieur de l'alésage interne du logement ; et
déformation de la paroi au niveau de la première extrémité globalement fermée du logement pour précharger le ressort contre le palier de support et pousser la première surface de palier du palier de support contre une surface externe de la partie rotule du pivot à rotule et pour réduire les jeux entre les composants dans le alésage interne du logement.

2. Procédé selon la revendication 1, ladite étape de déformation de la paroi (28) étant en outre définie en tant que pressage de la saillie (90) de la paroi.

3. Procédé selon la revendication 2, ladite étape de pressage de la saillie (90) de la paroi (28) étant en outre définie en tant que pressage de la saillie de la paroi jusqu'à ce que la surface extérieure (29) de la paroi soit globalement plate.

4. Procédé selon la revendication 3, ladite saillie (90) étant de forme globalement conique.

5. Procédé selon la revendication 1, ledit alésage interne du logement (22) présentant un épaulement (40) orienté vers la seconde extrémité ouverte (26) et ledit palier de sortie (65, 64, 164) venant en butée contre l'épaulement.

6. Procédé selon la revendication 2, comprenant en outre l'étape de sertissage de la seconde extrémité ouverte (26) du logement (22) pour présenter une lèvre s'étendant radialement vers l'intérieur (80) pour piéger le palier de sortie (65, 64, 164) à l'intérieur du logement entre la lèvre s'étendant radialement vers l'intérieur et l'épaulement (40).

7. Procédé selon la revendication 1, ladite seconde surface de palier (66) comprenant une partie incurvée semi-sphérique (67) et une partie cylindrique (68).

8. Procédé selon la revendication 1, ladite première extrémité globalement fermée (24) du logement comprenant une ouverture de lubrifiant (30).
